**Europäisches Patentamt**

**European Patent Office**

**Office européen des brevets**

(11) Veröffentlichungsnummer: **0 309 752**

**A2**

(12) # EUROPÄISCHE PATENTANMELDUNG

(21) Anmeldenummer: **88114160.0**

(22) Anmeldetag: **31.08.88**

(51) Int. Cl.4: **B62D 5/30**

(30) Priorität: **28.09.87 DE 3732662**

(43) Veröffentlichungstag der Anmeldung:
**05.04.89 Patentblatt 89/14**

(84) Benannte Vertragsstaaten:
**AT BE CH ES FR GB IT LI NL SE**

(71) Anmelder: **Krauss-Maffei Aktiengesellschaft**
**Krauss-Maffei-Strasse 2**
**D-8000 München 50(DE)**

(72) Erfinder: **Pollner, Jürgen, Dipl.-Ing. (FH)**
**Fritz-Reuter-Strasse 36**
**D-8000 München(DE)**
Erfinder: **Trummer, Gregor, Dipl.-Ing. (FH)**
**Alpenblick 5**
**D-8134 Aschering(DE)**
Erfinder: **Mölzer, Peter, Dipl.-Ing.**
**Geranienweg 7**
**D-8061 Schwabhausen(DE)**

(54) **Fahrzeug mit von hydraulischen Drehmotoren angetriebenen Antriebsrädern und einem hydraulischen Lenksystem.**

(57) Bei einem Transport- oder Schleppfahrzeug, dessen Antriebsräder (11, 11') von hydraulischen Drehmotoren (9, 9') angetrieben sind und das ein hydraulisches Lenksystem aufweist, kann auch bei einem Ausfall des Fahrzeugmotors (1) bzw. der von ihm angetriebenen Hydraulikpumpen (3, 21) die Lenkfähigkeit des Fahrzeugs z.B. für das Abschleppen gewährleistet werden, indem das Lenksystem (23) über eine Verbindungsleitung (31) mit Schaltventil (33) mit Hydraulikmedium beaufschlagt wird, welches von den im Schiebebetrieb als Pumpen arbeitenden hydraulischen Drehmotoren (9, 9') gefördert wird.

EP 0 309 752 A2

# Fahrzeug mit von hydraulischen Drehmotoren angetriebenen Antriebsrädern und einem hydraulischen Lenksystem

Die Erfindung betrifft ein Fahrzeug, insbesondere ein Transport- oder Schleppfahrzeug, von der im Oberbegriff des Anspruchs 1 angegebenen Art.

Bei einem Fahrzeug dieser Art benötigen sowohl die mit den Antriebsrädern gekoppelten hydrostatischen Drehmotoren als auch das hydraulische Lenksystem jeweils die Beaufschlagung mit einem unter Druck stehenden Hydraulikmedium. Dieses wird von entsprechenden Pumpen geliefert, die vom Fahrzeugmotor, z.B. einem Dieselmotor, angetrieben werden. Ist dieser Motor außer Betrieb, so fehlt Hydraulikdruck nicht nur zum Antreiben der Antriebsräder, sondern auch zum Betätigen der Lenkung. Es ist aber häufig erforderlich, das Fahrzeug auch bei Stillstand oder Ausfall des Fahrzeugmotors lenkfähig zu halten. Solche Betriebszustände können z.B. dann vorliegen, wenn das Fahrzeug bei stillstehendem oder defektem Motor abgeschleppt werden soll, oder wenn auf einer Gefällestrecke der Motor ausfällt.

Es ist bei Fahrzeugen mit hydraulischer Lenkung bekannt, mit den Antriebsrädern Notpumpen zu koppeln, die bei Ausfall des Fahrzeugmotors im Schiebebetrieb von den Antriebsrädern angetrieben werden und Hydraulikdruck für das Be tätigen des Lenksystems erzeugen. Eine solche Notpumpe bedeutet jedoch einen zusätzlichen Aufwand. Außerdem ist eine solche Notpumpe nahezu in allen Betriebszuständen des Fahrzeugs außer Betrieb und wird nur, wenn überhaupt, in äußerst seltenen Notfällen in Betrieb genommen. Es ist dann nicht immer gewährleistet, daß die Notpumpe nach extrem langer Stillstandszeit im Notfall auch ordnungsgemäß arbeitet.

Der Erfindung liegt die Aufgabe zugrunde, bei einem Fahrzeug der eingangs genannten Art ohne wesentlichen Mehraufwand ein einwandfreies Arbeiten des hydraulischen Lenksystems auch bei Ausfall des Fahrzeugmotors bzw. der den Hydraulikdruck erzeugenden Pumpen zu gewährleisten. Die Lösung der Aufgabe ist im Anspruch 1 angegeben. Die Unteransprüche beziehen sich auf weitere vorteilhafte Ausgestaltungen.

Die Erfindung nutzt in vorteilhafter Weise die Tatsache aus, daß die mit den Antriebsrädern gekoppelten hydrostatischen Drehmotoren im Schiebebetrieb zwangsläufig als Pumpen antreiben und deshalb Hydraulikdruck erzeugen können, der zur Notversorgung des hydraulischen Lenksystems herangezogen werden kann. Hierzu wird im wesentlichen nur eine Verbindungsleitung mit einem Schaltventil benötigt. Da die den Antriebsrädern zugeordneten Drehmotoren ständig in Betrieb sind, kann auch im Schiebebetrieb bei Ausfall des Fahrzeugmotors mit ihrem ordnungsgemäßen Arbeiten im Pumpbetrieb gerechnet werden.

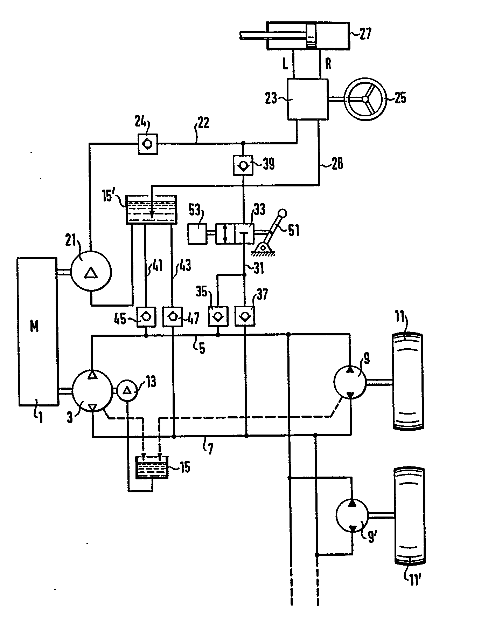

Eine Ausführungsform der Erfindung wird anhand der Zeichnung näher erläutert. Diese zeigt schematisch und stark vereinfacht das hydraulische Schaltbild des hydraulischen Antriebssystems und des hydraulischen Lenksystems eines Transportfahrzeugs.

Der Fahrzeugmotor 1 treibt eine Hydraulikpumpe 3 an, die in einem geschlossenen Hydraulikkreis über die Hinleitung 5 und die Rückleitung 7 hydrostatische Drehmotoren 9, 9' usw. mit Hydraulikmedium versorgt, welche mit den Antriebsrädern 11, 11' usw. des Fahrzeugs gekoppelt sind. Normalerweise sind z.B. die beiden Räder 11, 11' einer Antriebsachse mit je einem Drehmotor 9, 9' gekoppelt, es können aber weitere Drehmotoren für weitere Antriebsräder, z.B. bei Vierradantrieb, vorgesehen sein. Für Vorwärts- und Rückwärtsfahrt ist die Förderrichtung der Pumpe 3 umkehrbar.

Die Pumpe 3 dient nur zum Umpumpen des Hydraulikmediums im geschlossenen Kreislauf über die Leitungen 5 und 7. Um in diesem Kreislauf ein erhöhtes Druckniveau von z.B. 20-30 Bar ständig aufrechtzuerhalten, ist eine weitere, ebenfalls vom Motor 1 angetriebene Hilfspumpe 13 vorgesehen, die bei Bedarf Hydraulikmedium aus einem Behälter 15 entnehmen kann. Ferner kann Leckflüssigkeit aus der Pumpe 3 bzw. jedem der Drehmotoren 9, 9' usw. in den Behälter 15 abfließen, wie durch gestrichelte Verbindungsleitungen angedeutet.

Ebenfalls vom Fahrzeugmotor 1 wird eine Hydraulikpumpe 21 angetrieben, die Hydraulikflüssigkeit aus einem Behälter 15' (der mit dem Behälter 15 identisch sein kann) entnimmt und über die Leitung 22 mit Rückschlagventil 24 einer hydraulischen Lenksteuerung 23 zuführt. Diese beaufschlagt in Abhängigkeit von den Lenkausschlägen des Lenkrades 25 des Fahrzeugs einen der beiden Arbeitsräume des hydraulischen Lenkzylinders 27 mit dem Hydraulikmedium, um dessen Kolbenstange ein- oder auszufahren und dadurch eine Lenkung nach rechts oder links zu bewirken. Die Lenkhydraulik 23 ist in an sich bekannter Weise als LenkServostat ausgebildet. Über eine Leitung 28 kann das Hydraulikmedium in den Behälter 15' zurückfließen.

Die insoweit beschriebene Anordnung ist an sich bekannt.

Wenn der Fahrzeugmotor 1 ausfällt, wird auch die Pumpe 21 nicht angetrieben und erzeugt keinen Hydraulikdruck für die Betätigung der Lenkung. Wenn das Fahrzeug dann z.B. mit fremder Kraft abgeschleppt wird, ist trotzdem eine Lenkung erforderlich. Um für solche und ähnliche Fälle das Lenksystem mit Hydraulikdruck zu beaufschlagen, wird erfindungsgemäß die Tatsache ausgenutzt, daß beim Abschleppen des Fahrzeugs die Antriebsräder 11, 11' die Rotoren der hydrostatischen Drehmotoren 9, 9' usw. in Drehung versetzen, wodurch diese als Pumpe arbeiten und je nach der Fahrtrichtung in einer der beiden Leitungen 5, 7 des hydraulischen Antriebssystems einen erhöhten Hydraulikdruck erzeugen.

Um diesen Druck für das Lenksystem nutzen zu können, ist eine Verbindungsleitung 31 vorgesehen, die über je ein Rückschlagventil 35, 37 mit jeder der beiden Hydraulikleitungen 5, 7 des Antriebssystems verbunden ist. Über ein Schaltventil 33 und ein weiteres Rückschlagventil 39 ist die Verbindungsleitung 31 mit der Hydraulikleitung 22 des Lenksystems verbunden. Wird das Schaltventil 33 geöffnet, so kann das im Schiebebetrieb von den Drehmotoren 9, 9' umgepumpte Hydraulikmedium aus der Leitung 5 oder 7 über die Verbindungsleitung 31 in die Lenkhydraulik 23 und über diese in den Lenkzylinder 37 geleitet werden, um das Fahrzeug zu lenken. Da für die Lenkbewegung ein Hydraulikmedium aus dem von den Leitungen 5, 7 gebildeten AntriebsHydraulikystem verbraucht wird, sind weitere Leitungen 41, 43 vorgesehen, die über Rückschlagventile 45, 47 mit dem Hydraulikbehälter 15' verbunden sind, so daß Hydraulikmedium nachgesaugt werden kann.

Das Schaltventil 33 kann von Hand mittels eines Hebels 51 od.dgl. betätigt werden, z.B. wenn das Fahrzeug wegen detekten Antriebsmotors 1 abgeschleppt werden soll. Es ist aber stattdessen oder zusätzlich auch eine automatische Betätigung des Schaltventils 33 mittels eines Betätigungsgliedes 53 vorgesehen, welches mit einem Schalter, Sensor od.dgl. verbunden sein kann, der auf einen Ausfall des Motors 1 anspricht. Beispielsweise kann die Batterieladekontrolle des Motors 1 ein Betätigungssignal für das Betätigungsglied 53 liefern, wenn bei eingeschaltetem Motor 1 keine Aufladung der Batterie erfolgt. Auch ein Druckabfall am Ausgang der Hydraulikpumpe 3 oder 21, oder eine Umkehr des Druckgefälles in den Hydrauliksystemen kann als Auslösesignal für das Betätigungsglied 53 herangezogen werden.

## Ansprüche

1. Fahrzeug, insbesondere Transport- oder Schleppfahrzeug mit von hydraulischen Drehmotoren angetriebenen Antriebsrädern und einem hydraulischen Lenkystem, dadurch **gekennzeichnet**, daß im Schiebebetrieb des Fahrzeugs bei antriebslosen Rädern (11, 11') das hydraulische Lenksystem (23) mittels einer Verbindungsleitung (31) mit Schaltventil (33) mit von den hydraulischen Drehmotoren (9, 9') gefördertem Hydraulikmedium beaufschlagbar ist.

2. Fahrzeug nach Anspruch 1 , dadurch **gekennzeichnet** , daß das Schaltventil (33) von Hand schaltbar ist.

3. Fahrzeug nach Anspruch 1 , dadurch **gekennzeichnet** , daß das Schaltventil (33) selbsttätig in der Abhängigkeit vom Ausfall der hydraulischen Versorgungspumpe (3, 21) und/oder des Antriebsmotors (1) des Fahrzeugs betätigbar ist.